# EUROPÄISCHE PATENTSCHRIFT

(11) **EP 3 781 846 B1**
(45) Veröffentlichungstag und Bekanntmachung des Hinweises auf die Patenterteilung: **01.03.2023**
(21) Anmeldenummer: 19715386.9
(22) Anmeldetag: 21.03.2019
(51) Int. Cl.: F16H 63/34, F16H 59/68, F16H 63/48

(54) **VERFAHREN ZUR BESTIMMUNG EINES ZUSTANDES EINER PARKSPERRE EINES FAHRZEUGES**
METHOD FOR DETERMINING A STATE OF A PARKING LOCK OF A VEHICLE
PROCÉDÉ POUR DÉTERMINER L'ÉTAT D'UN FREIN DE STATIONNEMENT D'UN VÉHICULE

(30) Priorität: 20.04.2018 DE 102018109465
(43) Veröffentlichungstag der Anmeldung: 24.02.2021
(73) Patentinhaber: Schaeffler Technologies AG & Co. KG, 91074 Herzogenaurach (DE)
(72) Erfinder: ZELLER, Florian, 79100 Freiburg (DE); DIETRICH, Markus, 77704 Oberkirch (DE)
(86) Internationale Anmeldenummer: PCT/DE2019/100268
(87) Internationale Veröffentlichungsnummer: WO 2019/201375

(56) Entgegenhaltungen:
- CN-A- 106 051 154
- DE-A1- 4 141 545
- DE-A1-102009 037 866
- DE-A1-102016 219 895

## Beschreibung

Die Erfindung betrifft ein Parksperrenaktor und ein Verfahren zur Bestimmung eines Zustandes einer Parksperre eines Fahrzeuges, bei welchem eine Parkklinke durch einen von einem Elektromotor angetriebenen Parksperrenaktor automatisiert formschlüssig in ein Parksperrenrad ein- oder ausgeklinkt wird.

In automatisierten Antriebssträngen von Fahrzeugen werden Parksperren verwendet, um die Fortbewegung des Fahrzeuges im Parkbetrieb, insbesondere an Fahrbahnsteigungen, zu verhindern. Die Parksperre verfügt normalerweise über eine Parkklinke und ein Parksperrenrad. Durch Einrasten der Parkklinke in eine Zahnlücke des Parksperrenrades wird ein Formschluss zwischen einem Antriebsstrang und einem Getriebegehäuse hergestellt. Somit ist das Fahrzeug abgesichert. Durch Auslegen der Parkklinke aus der Zahnlücke des Parksperrenrades ist der Antriebsstrang und somit das Fahrzeug wieder entsperrt. Die Parkklinke wird dabei mit einem integrierten Parksperrenaktor betätigt. Eine Bewegung des Aktors ist nur beim Abstellen des Fahrzeuges und vor dem Wegfahren des Fahrzeuges erforderlich. Um die Position des Parksperrenaktors zu erkennen, wird eine Bewegung der Antriebseinheit des Parksperrenaktors mit einem Sensor detektiert. Die sensierte Position kann aber verlustig gehen, was beispielsweise durch eine Unterspannung möglich ist. Dann ist eine Referenzierung und Plausibilisierung der Parksperrenposition notwendig. Dies erfolgt durch das Anfahren der Anschläge der Parksperre und muss aufgrund von unbekannten Positionen mit einer geringen Fahrgeschwindigkeit durchgeführt werden, um ein Verklemmen des Aktors zu vermeiden. Ein solcher Vorgang ist sehr zeitaufwändig.

DE 10 2016 219 895 A1 offenbart eine Parksperrenbetätigung wobei in einem Gehäuse die Bewegung des Betätigungselements mittels Hall-Sensoren, Hall-Gebern und Hall-Empfängern bestimmt werden kann. Andere Sensoren können in anderen Bereichen des Gehäuses oder des Betätigungsmechanismus angeordnet sein.

CN 106 051 154 A zeigt ein Verfahren zur Betätigung einer elektrischen Parksperre eines Fahrzeugs.

Aus der WO 2015/165456 A1 ist ein Verfahren zur Erkennung einer Rotorlage eines Elektromotors bekannt, bei welchem ein an einem Rotor angeordnetes Target mit einem Sensor abgetastet wird. Dabei wird eine Drehbewegung des Rotors mit einem induktiven oder einem kapazitiven Sensor detektiert.

Der Erfindung liegt die Aufgabe zugrunde, ein ein Parksperrenaktor und ein Verfahren zur Bestimmung eines Zustandes der Parksperre anzugeben, bei welchem der Referenzierungs- und Plausibilisierungsvorgang verkürzt werden kann.

Erfindungsgemäß ist die Aufgabe dadurch gelöst, dass zur Ermittlung eines Zusatzzustandes zwischen eingeklinkter und ausgeklinkter Parkklinke eine axiale Position einer durch einen Elektromotor angetriebenen Spindelstange eines erfindungsgemäßen, im Folgenden genauer beschriebenen Parksperrenaktors erfasst wird. Dies hat den Vorteil, dass die zu dem Referenzierungs- und Plausibilisierungsvorgang erforderliche zusätzliche Positionsinformation in einem verkürzten Zeitraum ermittelt werden kann.

Vorteilhafterweise wird die Position der Spindelstange induktiv oder kapazitiv erfasst. Solche Messprinzipien benötigen wenig Bauraum und sind daher leicht in eine bestehende Parksperrenaktorik einsetzbar.

Die Erfindung betrifft auch den o.g. Parksperrenaktor für eine Parksperre eines Fahrzeuges, umfassend einen Elektromotor, der mit einem axial beweglichen Getriebe zur Betätigung einer Parkklinke der Parksperre zusammenwirkt. Bei einem Parksperrenaktor, bei welchem ein Messsystem für einen Plausibilisierungs- und Referenzierungsvorgang einfach verbaubar ist, steht eine durch den Elektromotor angetriebene Spindelstange zur Bestimmung eines Zustandes der Parksperre mit einem im Aktor angeordneten induktiven Sensor in einer Wirkverbindung.

Erfindungsgemäß umfasst der induktive Sensor eine Messspule, die mit einer auf einer Leiterplatte angeordneten, einen Schwingkreis zur Auswertung des Signals der Messspule bei axialer Bewegung der Spindelstange umfassenden Auswerteschaltung elektrisch verbunden ist. Die Induktivität der Messspule ändert sich dabei in Abhängigkeit des Abstandes der Spindelstange von der Leiterplatte. Je größer die Ausdehnung der Messspule ist, desto geringer wird die Induktivität. Dies wird über einen in der Auswerteschaltung enthaltenen Schwingkreis ausgewertet, wodurch die Position der Spindelstange zwischen dem eingeklinkten und dem ausgeklinkten Zustand der Parkklinke ermittelt werden kann.

Erfindungsgemäß ist die Messspule als Federspule ausgebildet, die einerseits direkt mit der Spindelstange und andererseits mit der Leiterplatte zur elektrischen Verbindung mit der Auswerteschaltung kontaktiert ist. Durch die Integration der Messspule zwischen Spindelstange und Leiterplatte ist kein zusätzlicher Bauraum für diese Sensoranordnung notwendig, da hier eine direkte induktive Methode zur Anwendung kommt.

Erfindungsgemäß ist die Messspule alternativ mit der als Induktivem Dämpfer wirkenden, mit der Spindelstange verbundenen Federspule elektrisch verbunden und ein Ausgangsanschluss der Messspule mit dem Schwingkreis verbunden. Auch hierdurch ergibt sich wiederum eine positionsabhängige Induktivität der Messspule, die von der Federspule bedämpft wird, die in Abhängigkeit der axialen Position der Spindelstange gespannt oder zusammengedrückt wird. Eine solche Integration ist sehr einfach, da die Messspule nicht an der Spindelstange kontaktiert werden muss.

In einer platzsparenden Variante ist die Messspule auf der Leiterplatte angeordnet.

In einer Ausführungsform ist die Messspule integraler Bestandteil der Leiterplatte. Dadurch wird kein zusätzlicher Bauraum für die Messspule auf der Leiterplatte benötigt.

In einer weiteren Ausführungsform ist die Federspule als Druckfeder ausgebildet. Damit lässt sich eine kommerziell zu erwerbende metallische Federspule einfach zur Positionsbestimmung des Parksperrenaktors heranziehen.

Eine besonders einfache Ausgestaltung der Druckfeder ist immer dann gegeben, wenn sie gerade oder konisch ausgebildet ist.

Die Erfindung lässt zahlreiche Ausführungsformen zu. Zwei davon sollen anhand der in der Zeichnung dargestellten Figuren näher erläutert werden.

Es zeigen:
- Fig. 1: ein Ausführungsbeispiel einer Parksperre für ein Fahrzeug mit einem Parksperrenaktor,
- Fig. 2: ein erstes Ausführungsbeispiel des erfindungsgemäßen Parksperrenaktors,
- Fig. 3: ein zweites Ausführungsbeispiel des erfindungsgemäßen Parksperrenaktors,
- Fig. 4: ein Ausführungsbeispiel einer geschlossenen und einer geöffneten Parksperre.

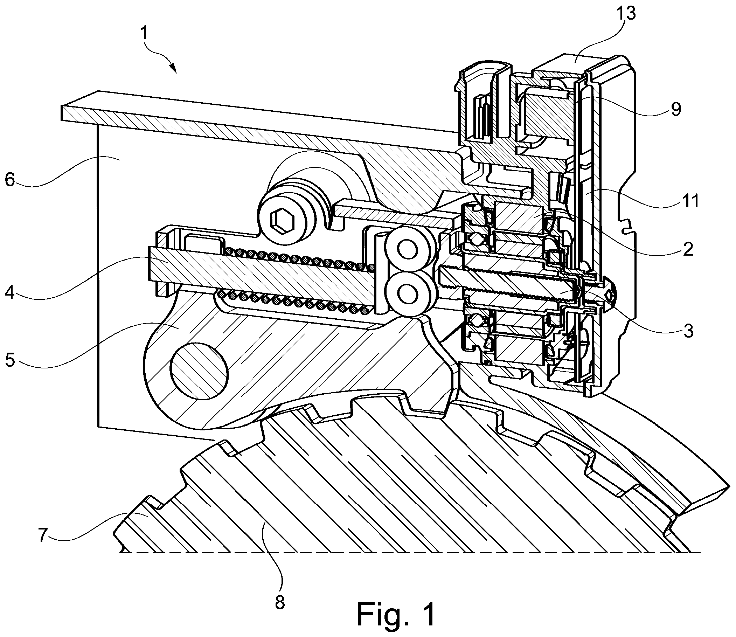

In Fig. 1 ist ein Ausführungsbeispiel einer Parksperre mit einem Parksperrenaktor dargestellt.

Die Parksperre 1 weist dabei einen Elektromotor 2 auf, welcher über eine Spindelstange 3 ein axial bewegliches Element 4 der Parksperre 1 bewegt. Das Element 4 betätigt dabei eine Parkklinke 5, die an einem Getriebegehäuse 6 einseitig befestigt ist. Je nach axialer Position der Spindelstange 3 wird dabei die Parkklinke 5 in eine Verzahnung 7 eines Parksperrenrades 8 eingeklinkt oder aus dieser gelöst.

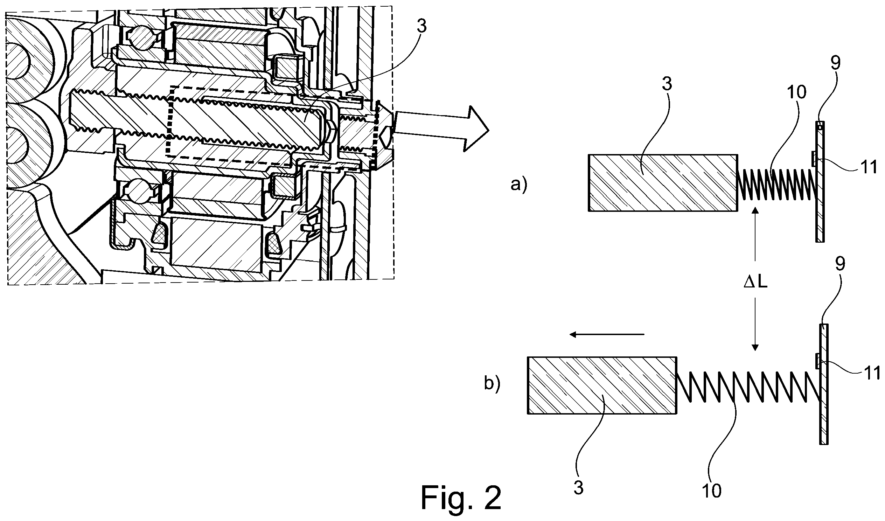

In Fig. 2 ist ein erstes Ausführungsbeispiel des erfindungsgemäßen Parksperrenaktors 13 dargestellt, wobei schematisch insbesondere die Motorwelle 3 und eine im Parksperrenaktor 13 angeordnete Leiterplatte 9 dargestellt sind. Eine Messspule 10, die als zylindrische metallische Druckfeder 12 ausgebildet ist, ist elektrisch an einem Ende mit der Spindelstange 3 und am anderen Ende mit der Leiterplatte 9 kontaktiert. Durch die axiale Bewegung der Spindelstange 3 ändert sich der Abstand der Spindelstange 3 zu der Leiterplatte 9 in Abhängigkeit davon, ob die Parkklinke 5 in das Parksperrenrad 8 einrastet oder nicht. Dabei wird die Messspule 10 zusammengedrückt (Fig. 2a) oder entspannt (Fig. 2b). Durch diese Längenänderung der Messspule 10 erfolgt eine Induktivitätsänderung, die somit positionsabhängig ist. Je größer die Ausdehnung der Messspule 10 ist, desto geringer ist die Induktivität und je geringer die Ausdehnung der Messspule 10 ist, umso größer ist die Induktivität. Die Messspule 10 ist über die Leiterplatte 9 mit einer Auswerteschaltung 11, die ebenfalls auf der Leiterplatte 9 positioniert ist, verbunden, die einen Schwingkreis enthält, welche das induktive Signal der Messspule 10 auswertet und dieses einer axialen Position der Spindelstange 3 zuordnet. Somit können auch Zwischenpositionen des Parksperrenaktors 13, welche zwischen dem Einklinken und dem Ausklinken der Parkklinke 5 aus dem Parksperrenrad 8 liegen, jederzeit festgestellt werden, so dass ein Referenzierungs- und Plausibilisierungsvorgang, welcher beispielsweise immer dann notwendig ist, wenn eine Positionsinformation des Parksperrenaktors 13 verlorengeht, zeitnah durchgeführt werden.

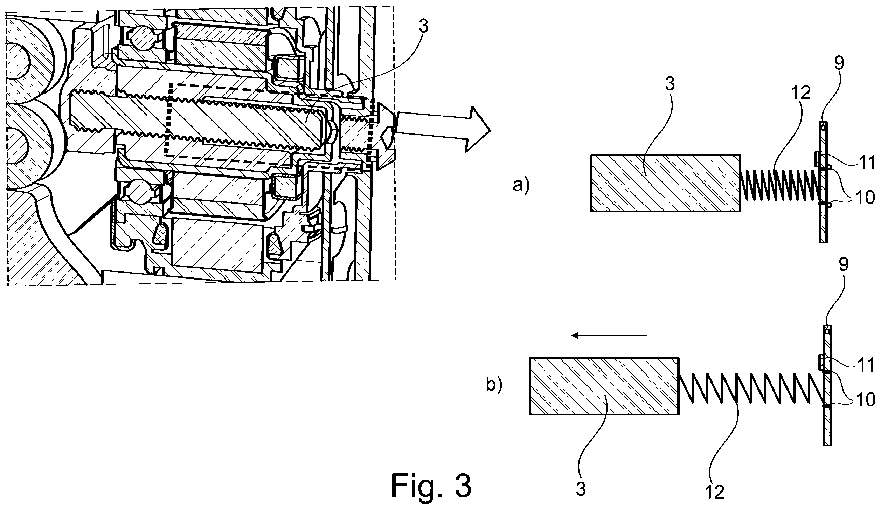

In Fig. 3 ist ein zweites Ausführungsbeispiel des erfindungsgemäßen Parksperrenaktors 13 gezeigt, bei welcher ebenfalls die Druckfeder 12 zwischen Leiterplatte 9 und Spindelstange 3 befestigt ist. Diese Druckfeder 12 dient aber in diesem Fall zur Bedämpfung der Messspule 10, welche integraler Bestandteil der Leiterplatte 9 ist. Die elektrische Kontaktierung der integrierten Messspule 10 erfolgt einerseits über die Druckfeder 12 und ist andererseits mit der Auswerteschaltung 11 verbunden. Auch hierdurch wird eine induktionsabhängige Positionsbestimmung des Parksperrenaktors möglich.

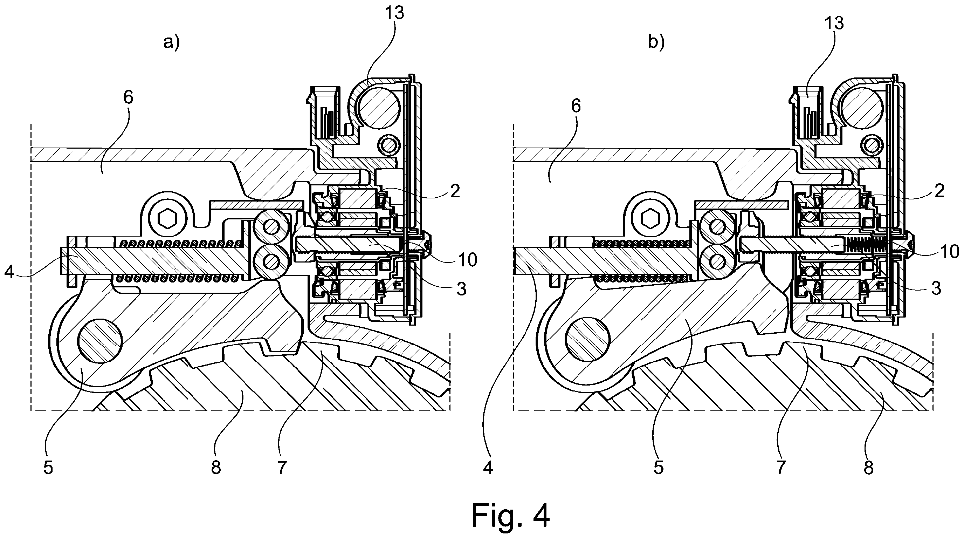

In Fig. 4 a ist die Parksperre 1 in ihrem geschlossenen Zustand und in Fig. 4b im geöffneten Zustand dargestellt. Wie aus Fig. 4a hervorgeht, ist die Parksperre 1 geschlossen, wenn die als Messfeder 10 ausgebildete Druckfeder 12 zusammengedrückt ist und der Abstand zwischen Spindelstange 3 und Leiterplatte 9 gering ist. Dieser Abstand zwischen Spindelstange 3 und

Leiterplatte 9 ist aber vergrößert, wenn die Parksperre 1 geöffnet ist und die Parkklinke 5 sich nicht im Eingriff mit dem Parksperrenrad 8 befindet. Dadurch wird die Druckfeder 12 entspannt, was eine geringere Induktivität nach sich zieht.

Beide Varianten können als Schalter bzw. Bereichserkennung eingesetzt werden, was die Anwendung vereinfacht.

### Bezugszeichenliste

- 1: Parksperre
- 2: Elektromotor
- 3: Spindelstange
- 4: Axial bewegliches Element
- 5: Parkklinke
- 6: Getriebegehäuse
- 7: Verzahnung
- 8: Parksperrenrad
- 9: Leiterplatte
- 10: Messspule
- 11: Auswerteschaltung
- 12: Druckfeder
- 13: Parksperrenaktor

## Patentansprüche

1. Parksperrenaktor für eine Parksperre eines Fahrzeuges, umfassend einen Elektromotor (2), der mit einem axial beweglichen Element (4) zur Betätigung einer Parkklinke (5) der Parksperre (1) zusammenwirkt, wobei eine durch den Elektromotor (2) angetriebene Spindelstange (3) zur Bestimmung eines Zustandes der Parksperre (1) mit einem im Parksperrenaktor (13) angeordneten induktiven Sensor (10, 11) in einer Wirkverbindung steht, wobei der induktive Sensor eine Messspule (10) umfasst, die mit einer auf einer Leiterplatte (9) angeordneten, einen Schwingkreis zur Auswertung des Signals der Messspule (10) bei axialer Bewegung der Spindelstange (3) umfassenden Auswerteschaltung (11) elektrisch verbunden ist, **dadurch gekennzeichnet, dass** die Messspule (10) als Federspule ausgebildet ist und einerseits direkt mit der Spindelstange (3) und andererseits mit der Leiterplatte (9) zur elektrischen Verbindung mit der Auswerteschaltung kontaktiert ist.

2. Parksperrenaktor für eine Parksperre eines Fahrzeuges, umfassend einen Elektromotor (2), der mit einem axial beweglichen Element (4) zur Betätigung einer Parkklinke (5) der Parksperre (1) zusammenwirkt, wobei eine durch den Elektromotor (2) angetriebene Spindelstange (3) zur Bestimmung eines Zustandes der Parksperre (1) mit einem im Parksperrenaktor (13) angeordneten induktiven Sensor (10, 11) in einer Wirkverbindung steht, wobei der induktive Sensor eine Messspule (10) umfasst, die mit einer auf einer Leiterplatte (9) angeordneten, einen Schwingkreis zur Auswertung des Signals der Messspule (10) bei axialer Bewegung der Spindelstange (3) umfassenden Auswerteschaltung (11) elektrisch verbunden ist, **dadurch gekennzeichnet, dass** die Messspule (10) mit der als induktivem Dämpfer wirkenden, mit der Spindelstange (3) und der Leiterplatte (9) verbundenen Federspule (12) elektrisch verbunden ist und ein Ausgangsanschluss der Messspule (10) mit dem Schwingkreis verbunden ist.

3. Parksperrenaktor nach Anspruch 2, **dadurch gekennzeichnet, dass** die Messspule (10) auf der Leiterplatte (9) angeordnet ist.

4. Parksperrenaktor nach Anspruch 2, **dadurch gekennzeichnet, dass** die Messspule (10) integraler Bestandteil der Leiterplatte (9) ist.

5. Parksperrenaktor nach Anspruch 1, **dadurch gekennzeichnet, dass** die Federspule als Druckfeder (12) ausgebildet ist.

6. Parksperrenaktor nach Anspruch 5, **dadurch gekennzeichnet, dass** die Druckfeder (12) gerade oder konisch ausgebildet ist.

7. Verfahren zur Bestimmung eines Zustandes einer Parksperre eines Fahrzeuges, bei welchem eine Parkklinke (5) durch einen, durch einen Elektromotor (2) angetriebenen, gemäß einem der vorhergehenden Ansprüche ausgeführten Parksperrenaktor (13), automatisch formschlüssig in ein Parksperrenrad (8) ein- oder ausgeklinkt wird, wobei zur Ermittlung eines Zusatzzustandes zwischen eingeklinkter und ausgeklinkter Parcklinke (5) eine axiale Position einer durch den Elektromotor (2) angetriebenen Spindelstange (3) des Parksperrenaktors (13) erfasst wird.

## Claims

1. A parking lock actuator for a parking lock of a vehicle, comprising an electric motor (2) which interacts with an axially movable element (4) for actuating a parking pawl (5) of the parking lock (1), wherein a spindle rod (3), driven by the electric motor (2), for determining a state of the parking lock (1) is operatively connected to an inductive sensor (10, 11) arranged in the parking lock actuator (13), wherein the inductive sensor comprises a measuring coil (10), which is electrically connected to an evaluation circuit (11) which is arranged on a printed circuit board (9) and which comprises a resonant circuit for evaluating the signal of the measuring coil (10) when the spindle rod (3) moves axially, **characterised in that** the measuring coil (10) is designed as a spring coil and is contacted on the one hand directly with the spindle rod (3) and on the other hand with the circuit board (9) for the electrically connecting to the evaluation circuit.

2. A parking lock actuator for a parking lock of a vehicle, comprising an electric motor (2), which interacts with an axially movable element (4) for actuating a parking pawl (5) of the parking lock (1), wherein a spindle rod (3), driven by the electric motor (2), for determining a state of the parking lock (1) is operatively connected to an inductive sensor (10, 11) arranged in the parking lock actuator (13), wherein the inductive sensor comprises a measuring coil (10), which is electrically connected to an evaluation circuit (11) which is arranged on a printed circuit board (9) and which comprises an oscillating circuit for evaluating the signal of the measuring coil (10) when the spindle rod (3) moves axially, **characterised in that** the measuring coil (10) is connected to the spring coil (12) which acts as an inductive damper and which is electrically connected to the spindle rod (3) and the printed circuit board (9), and an output terminal of the measuring coil (10) is connected to the resonant circuit.

3. The parking lock actuator according to claim 2, **characterised in that** the measuring coil (10) is arranged on the printed circuit board (9).

4. The parking lock actuator according to claim 2, **characterised in that** the measuring coil (10) is an integral part of the printed circuit board (9).

5. The parking lock actuator according to claim 1, **characterised in that** the spring coil is designed as a compression spring (12).

6. The parking lock actuator according to claim 5, **characterised in that** the compression spring (12) is designed to be straight or conical.

7. A method for determining the state of a parking lock of a vehicle, in which a parking pawl (5) is automatically interlockingly engaged in or disengaged from a parking lock wheel (8) by a parking lock actuator (13) which is designed according to one of the preceding claims and which is driven by an electric motor (2), wherein an axial position of a spindle rod (3) of the parking lock actuator (13) driven by the electric motor (2) is detected to determine an additional state between the engaged and disengaged parking pawl (5).

## Revendications

1. Actionneur de frein de stationnement pour un frein de stationnement d'un véhicule, comprenant un moteur électrique (2), qui coopère avec un élément à déplacement axial (4) pour l'actionnement d'un loquet de stationnement (5) du frein de stationnement (1), une tige de broche (3) entraînée par le moteur électrique (2) étant en liaison fonctionnelle pour la détermination d'un état du frein de stationnement (1) avec un capteur inductif (10, 11) agencé dans l'actionneur de frein de stationnement (13), le capteur inductif comprenant une bobine de mesure (10) qui est électriquement connectée à un circuit d'évaluation (11) agencé sur une carte de circuit imprimé (9), comprenant un circuit oscillant pour l'évaluation du signal de la bobine de mesure (10) lors d'un déplacement axial de la tige de broche (3), **caractérisé en ce que** la bobine de mesure (10) est conçue comme une bobine à ressorts et est en contact d'un côté directement avec la tige de broche (3) et d'un autre côté avec la carte de circuit imprimé (9) pour une connexion électrique avec le circuit d'évaluation.

2. Actionneur de frein de stationnement pour un frein de stationnement d'un véhicule, comprenant un moteur électrique (2), qui coopère avec un élément à déplacement axial (4) pour l'actionnement d'un loquet de stationnement (5) du frein de stationnement (1), une tige de broche (3) entraînée par le moteur électrique (2) étant en liaison fonctionnelle pour la détermination d'un état du frein de stationnement (1) avec un capteur inductif (10, 11) agencé dans l'actionneur de frein de stationnement (13), le capteur inductif comprenant une bobine de mesure (10) qui est électriquement connectée avec un circuit d'évaluation (11) agencé sur une carte de circuit imprimé (9), comprenant un circuit oscillant pour l'évaluation du signal de la bobine de mesure (10) lors d'un déplacement axial de la tige de broche (3), **caractérisé en ce que** la bobine de mesure (10) est électriquement connectée à la bobine à ressorts (12) agissant comme amortisseur inductif, reliée à la tige de broche (3) et à la carte de circuit imprimé (9) et une connexion de sortie de la bobine de mesure (10) est connectée au circuit oscillant.

3. Actionneur de frein de stationnement selon la revendication 2, **caractérisé en ce que** la bobine de mesure (10) est agencée sur la carte de circuit imprimé (9).

4. Actionneur de frein de stationnement selon la revendication 2, **caractérisé en ce que** la bobine de mesure (10) fait partie intégrante de la carte de circuit imprimé (9).

5. Actionneur de frein de stationnement selon la revendication 1, **caractérisé en ce que** la bobine à ressorts est conçue comme un ressort de compression (12).

6. Actionneur de frein de stationnement selon la revendication 5, **caractérisé en ce que** le ressort de compression (12) est conçu droit ou conique.

7. Procédé pour déterminer l'état d'un frein de stationnement d'un véhicule, dans lequel un loquet de stationnement (5) est en prise ou dégagé automatiquement par complémentarité de forme dans une roue de frein de stationnement (8) par un actionneur de frein de stationnement (13) réalisé selon l'une quelconque des revendications précédentes entraîné par un moteur électrique (2), une position axiale d'une tige de broche (3) de l'actionneur de frein de stationnement (13) entraînée par le moteur électrique (2) étant détectée pour la détermination d'un état supplémentaire entre un loquet de stationnement (5) en prise ou dégagé.
